# EUROPEAN PATENT APPLICATION

(11) **EP 1 408 304 A1**
(43) Date of publication of application: **14.04.2004**
(21) Application number: 03078065.4
(22) Date of filing: 26.09.2003
(51) Int. Cl.: G01C 21/36, G08G 1/0968, G08G 1/0969

(54) **Control System and Method for off-board application processing**

(30) Priority: 08.10.2002 US 266515
(71) Applicant: Delphi Technologies, Inc., Troy, MI 48007 (US)
(72) Inventor: Moody, Peter A., Fishers, IN 46038 (US); Coon, Bradley S., Russiaville, Indiana 46979 (US); Kady, Mark A., Greentown, Indiana 46936 (US); Wilhelm, Andrew L., Kokomo, Indiana 46902 (US); John, Vinod G., Carmel, IN 46033 (US)
(74) Representative: Denton, Michael John

(57) **Abstract**

An improved application processing system (18A, 18B, 18C, 18D, 18E) which utilizes both on-board components and off-board components connected via wireless data transfer devices (62, 64). On-board the vehicle is a user interface, or a microphone (22), which receives data in the form of human speech from the user (20), and components for digitization (56) and feature extraction (58) of the data with the data then being sent to an off-board processing system (66), which may include a speech recognition system (72) and a voice-enabled program application (74). After the data has been processed by the off-board system (66), the data is retransmitted to the on-board system, where the processed data (76) is converted from text to speech (78), reconstructed as speech (79), or displayed. The display or speech is then distributed to the drive or occupants by a radio (80), handheld device, or a display unit (84).

## Description

### TECHNICAL BACKGROUND

This invention relates to systems and methods of processing of speech recognition for vehicular computer operations.

### BACKGROUND OF THE INVENTION

As vehicles become more dependent on computers and as consumers demand more from their vehicles, such as navigation capabilities and calling for roadside assistance from the vehicle, more and more computer operations, or applications, must be performed by the vehicles. Increasing numbers of applications annually require additional hardware components and more complex computing platforms within the vehicles to perform those required operations. Alternatively, the applications may be performed totally off-board from the vehicle, but such an arrangement requires a continuous connection to the off-board resources and reliance upon possibly intermittent or interrupted telecommunications.

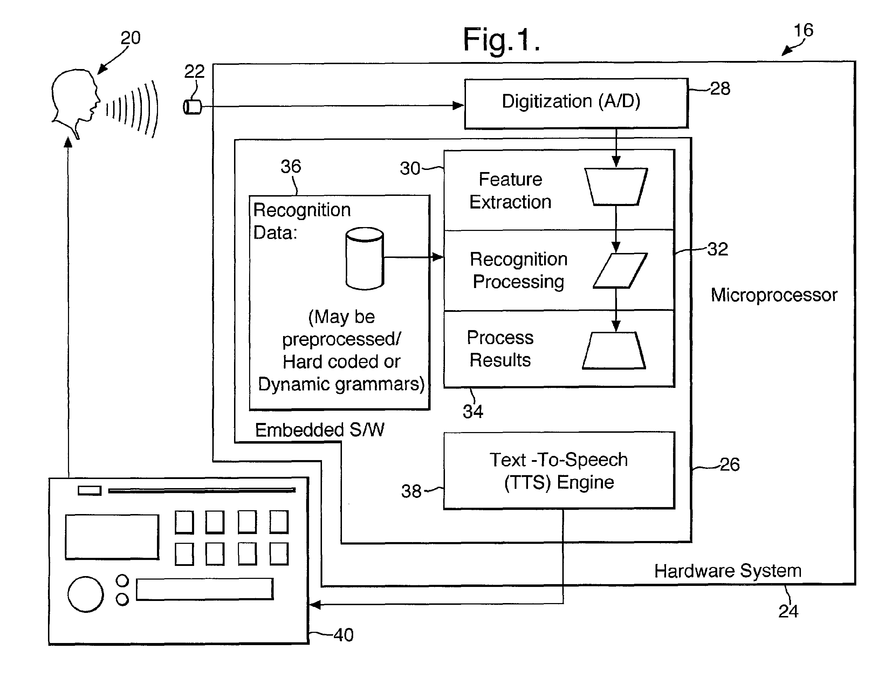

Referring to Figure 1, previous system 16 of application processing is shown with user 20 speaking into microphone 22, which is connected to hardware system 24, that is completely internal to the vehicle (not shown) in which user 20 is seated. Hardware system 24 includes imbedded software 26 for complete processing of the data from user 20. In this previous in-vehicle system, the data is passed through a digitization process 28, which is completed by, for example, an analog to digital converter. Once the data has been digitized, the data passes to embedded software 26 wherein feature extraction 30, recognition processing 32 and final result processing 34 occurs, with all of these processes being done within the vehicle. It is to be noted that the recognition data necessary for processing of the voice data is also maintained on board the vehicle in the imbedded software 26. After the data has been through all processing steps, it passes to a text-to-speech engine, also included within imbedded software 26 on the vehicle, wherein the result is converted to speech and distributed to the occupants of the vehicle via a radio, or communication device, 40. It is to be noted with this method, all application processing occurs on board the vehicle, thus requiring additional hardware to support the necessary steps as well as imbedded software and databases to perform the necessary functions. The amount of processing equipment and data needed may require a substantial cost, and the currency of the data may be questionable.

### SUMMARY OF THE INVENTION

The present invention is directed to an improved application processing system which utilizes both on-board and off-board components. On-board the vehicle is a microphone, which receives human speech from the driver, and components for digitization and feature extraction of the speech, the speech then being transmitted to an off-board application system. The off-board application uses the speech data and returns processed data. The resultant data is then sent back to the on-board components, where data is used for vehicle operations or the data is reconstructed to speech, with the resultant digitized speech being supplied to the driver via the radio, a handheld audio or display device, a dashboard display device, or other means.

According to a first embodiment of the invention, a control system for a vehicle that operates in conjunction with an off-board device including data processing means for operating a program application is provided. The control system includes a user interface device, an operations control device, and a data receipt device disposed in the vehicle, a data transmission device for transmission of data acquired from the user interface device to the data processing means, and the data receipt device adapted to receive data processed by the program application and provide the processed data for use by the operations control device.

A method of operating a vehicle including acquiring data from an occupant of the vehicle, processing the data, and operating the vehicle in response to the processed data is provided. The method includes transmitting the acquired data from the vehicle to an off-board system, processing the data according to a program application of the off-board system, transmitting processed data from the off-board system to the vehicle, and distributing the processed data to the occupant of the vehicle.

According to a second embodiment of the invention, a voice-enabled control system for use in conjunction with data processing means having a program application for assisting in the operation of a motor vehicle is provided. The voice-enabled control system includes a voice-actuated user interface adapted to receive data from an occupant of the motor vehicle in the form of speech and produce speech data, and a data receipt device, a data transmission device coupled to the voice-actuated user interface, the speech data being transmitted by the data transmission device in accordance with directions from the user interface, and the data receipt device receiving data from the data processing device, the data being used in operation of the vehicle.

### BRIEF DESCRIPTION OF THE DRAWINGS

The present invention will now be described, by way of example, with reference to the accompanying drawings, in which:
Figure 1 is a block schematic diagram of a prior art speech recognition system for on-board or in-vehicle usage;
Figure 2 is a flow diagram showing the basic operational steps of the present invention;
Figure 3 is a block schematic showing a first embodiment of the present invention;
Figure 4 is a block flow diagram schematically showing the operational steps of the embodiment of Figure 3;
Figure 5 is a block schematic showing a second embodiment of the present invention;
Figure 6 is a block schematic showing a third embodiment of the present invention including a global positioning system;
Figure 7 is a block schematic showing a fourth embodiment of the present invention and a data entry mechanism;
Figure 8 is a block flow diagram schematically showing the operational steps of the embodiment of Figure 7; and
Figure 9 is a block flow diagram schematically showing the operational steps of a fifth embodiment.

Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate two embodiments of the invention and such exemplification is not to be construed as limiting the scope of the invention in any manner.

### DESCRIPTION OF THE INVENTION

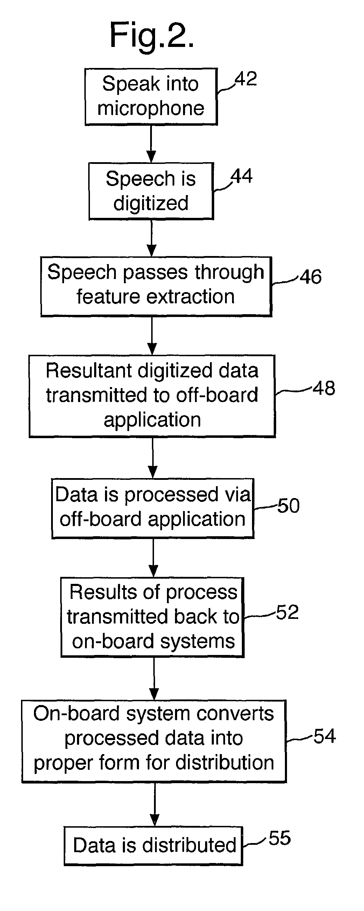

Referring now to Figure 2, the general concept of the distributed speech recognition application processing system is shown in flow chart form. In general, a user speaks into an on-board microphone (block 42), from which point the speech of the user is digitized (block 44) for later processing. The speech data after digitization passes through a feature extraction device (block 46), typically while still in the on board segment but not necessarily, with the resultant digitized data being transmitted then to an off-board processing application processing (block 48). While in the off-board segment, the data is processed through the selected off-board program application (block 50), which may be a navigation system or other such program application useful for operators of a motor vehicle. After the processing, the resulting processed data is transmitted back to the on-board system (block 52) at which point the on-board system then converts the processed data into a proper form for distribution to the operator or occupants of the vehicle (block 54), and the processed data is distributed (block 55). It is to be noted that this is a general overview of the application processing system, specific implementations of this system are shown in the following figures; however, such implementations are not the only implementations which may be used.

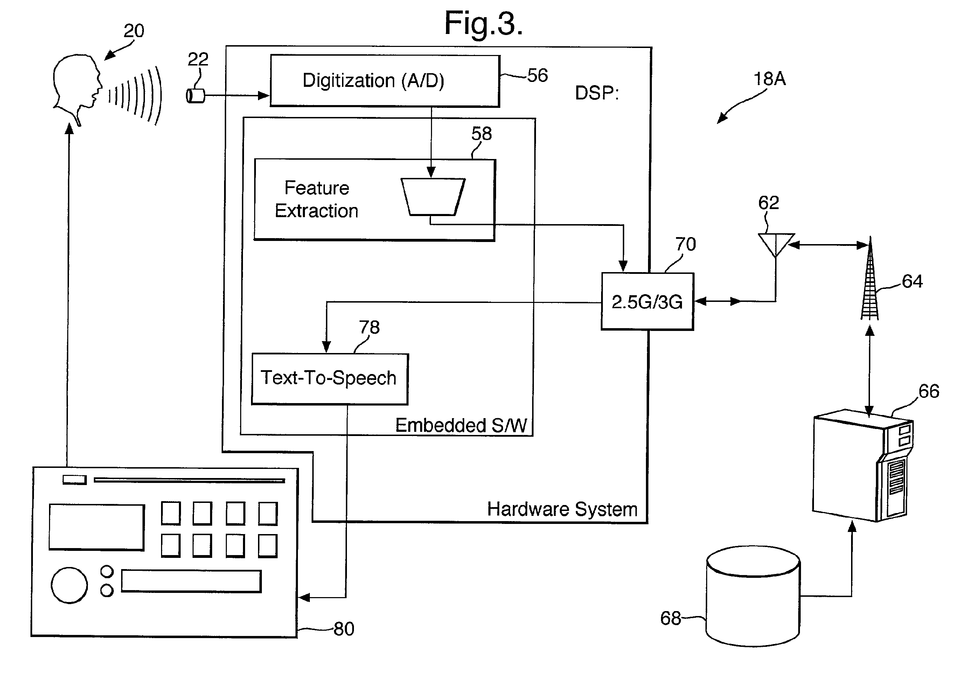

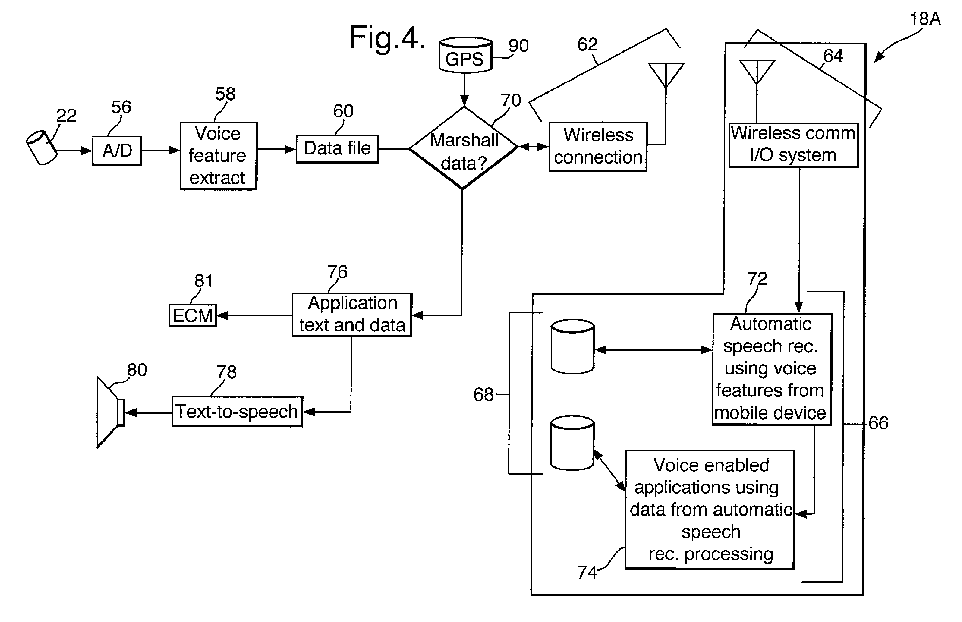

With reference to Figures 3 and 4, a first embodiment processing system 18A is shown wherein user 20, as in previous systems, speaks into on-board microphone 22, to input data, specifically voice data into the system with the data then being processed in accordance with the present invention. Microphone 22 comprises a portion of a user interface device, which also includes a display or audio device for distributing the processed data after the processed data has been transmitted back to the vehicle. Microphone 22 may also be utilized as an user control device for directing which program applications are to be run at the off-board device.

As is expected, the data passes through a digitizer or a digitization process 56, which may be similar to a digitization process 28 in the previous system. The digitization process may occur via a known analog to digital processor or other such device. After the digitization has occurred, the data then passes to feature extractor 58 to extract certain select elements of the data for comparison to recognition data and for later processing. From feature extractor 58 the digitized, and now extracted, data is consolidated into data file 60 and is further consolidated, or marshalled, at block 70, from which the data is sent via wireless connection 62, or via another such data transmission device, to a wireless antenna or to wireless communication input and output system 64 at the off-board facility. It is to be noted that the digitizer, feature extractor, and the data file, and the associated functions may be included as part of the user interface device. If the components such as the data file or later described speaker, assist in the operation of the vehicle, these components can constitute portions of an operations control device.

After the data has been received in the off-board facility, it passes into off-board processing 66 which includes the program applications to run, in this system the program application being automatic speech recognition system 72 and voice enabled program application 74, with the data first passing through automatic speech recognition system 72 and then through voice enabled application 74. Also included at the off-board facility is data storage 68, which includes all additional data which may be necessary for processing associated with speech recognition application 72 and voice enabled program application 74. Voice enabled program application 74 may include instructions or functions for assisting in operation of the vehicle, such as an operations control device would assist in vehicle operation. After the data has been fully processed by speech recognition application 72 and voice enabled program application 74, the now processed data is retransmitted to the in-vehicle system via wireless communication input and output system 64 and wireless connection 62 on the vehicle. It is to be noted that wireless connection 62 may be a single data transmission and data receipt device or may comprise two separate components, a data transmission device and a separate data receipt device.

Again, the data is consolidated at block 70, and from the consolidation the processed text and data 76 is transmitted to a receiving unit, which may be associated with consolidator 70, where text and data 76 may be passed to an operations control device, such as a electronic control module (ECM) 81 or other such device for controlling the vehicle operations. Such an operations control device also may be included in the additional embodiments which are described hereinbelow. Alternatively, text and data 76 may be passed to the text-to-speech conversion process 78, which is part of the embedded software 77 on the vehicle. After the data and text have been converted into speech, the resultant speech is then distributed to the user or occupants of the vehicle by means of speaker, or radio, 80 or another similar communications device. As stated above, the user interface device may also include speaker 80, or other similar devices for distribution of the processed data.

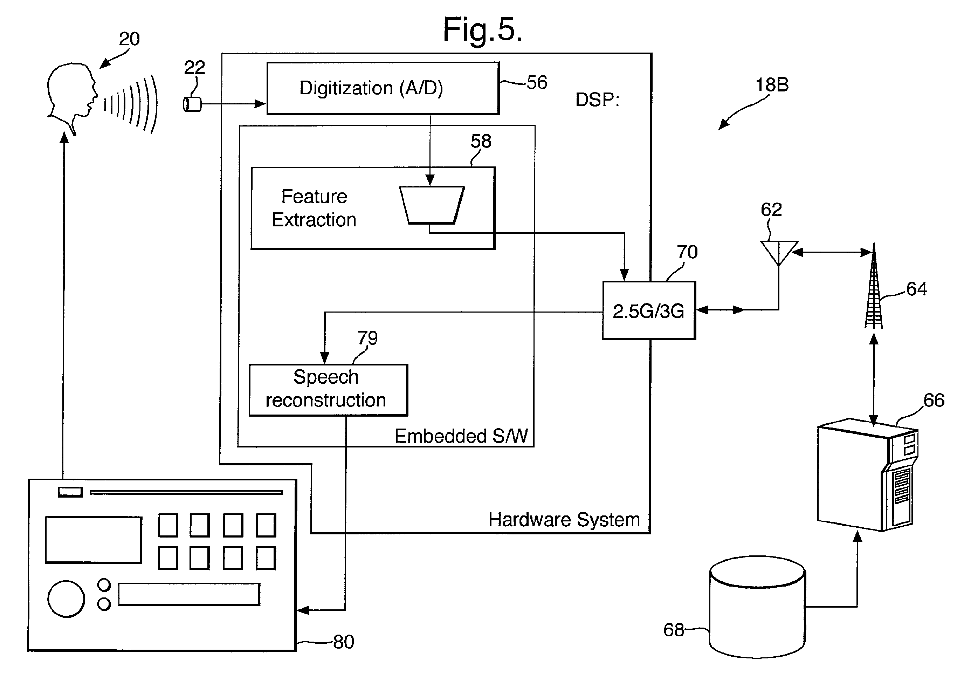

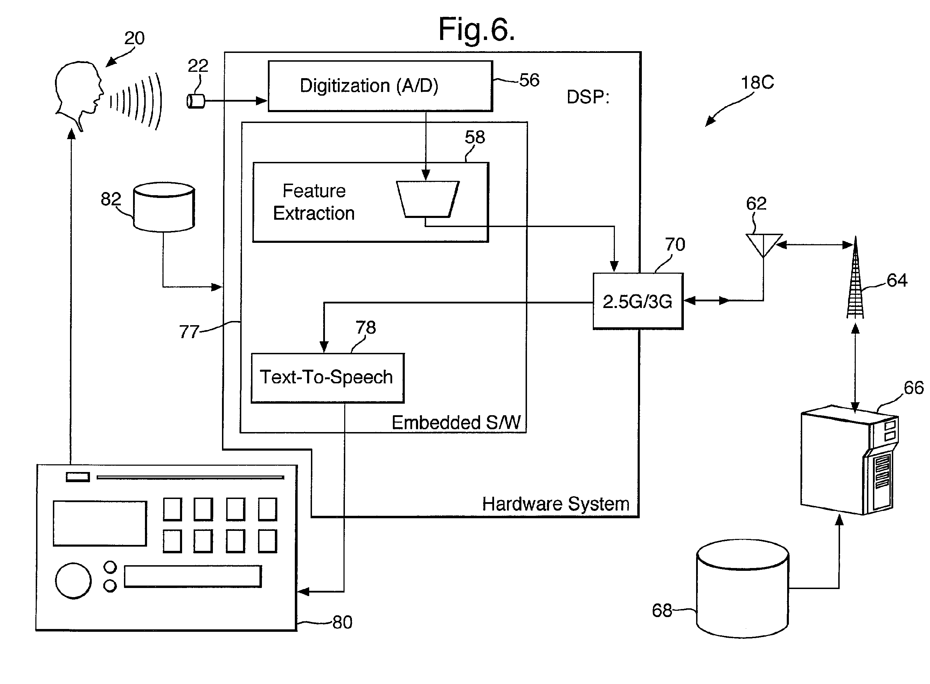

Referring now to Figures 5 and 6, modified forms of system 18A of Figure 3 are shown as systems 18B and 18C. In systems 18B and 18C, the vast majority of each respective system is identical to that of system 18A. However, system 18C of Figure 6 includes additional in-vehicle data storage device 82, which may be used for additional storage of data recorded by the user with that additional data then being processed at a later time, or the additional storage may be used to store programs for the feature extraction by extractor 58, the text-to-speech conversion by converter 78, or any other purpose for which additional storage is beneficial. System 18B of Figure 5 does not include the additional in-vehicle storage; but instead of using text-to-speech converter 78 utilizes a speech reconstruction mechanism, or process 79. By utilizing speech reconstruction 79, the speech data which has been sent and processed is returned not in textual format, but in audible format such as, for example, AIFF, AU (SUN), WAVE, and Delta coding, and is thus reconstructed to be distributed at radio, or speaker, 80 to the occupants of the vehicle rather than being converted from a textual format to an audible format.

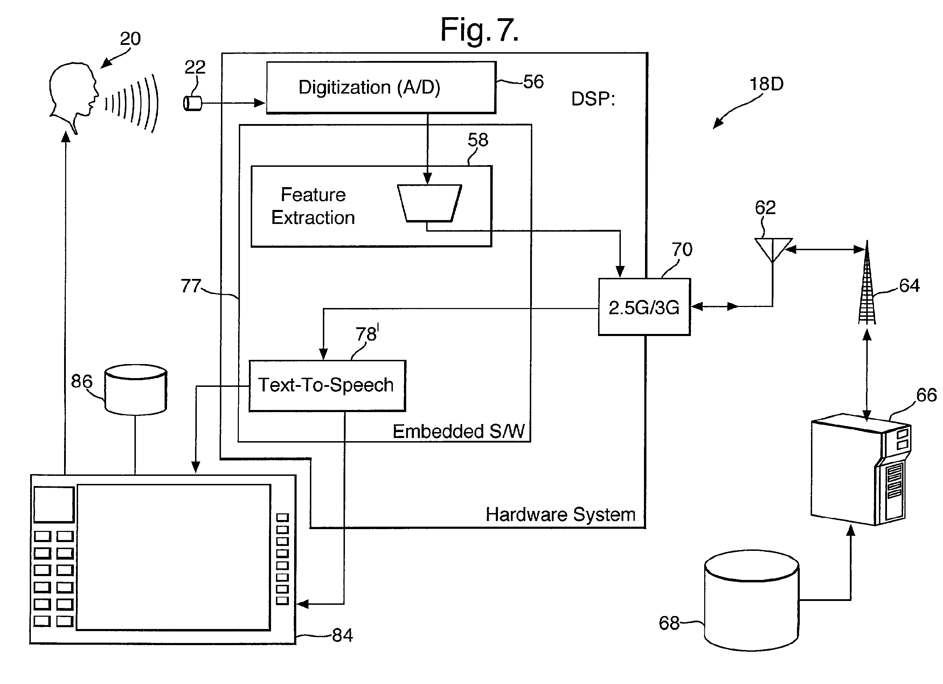

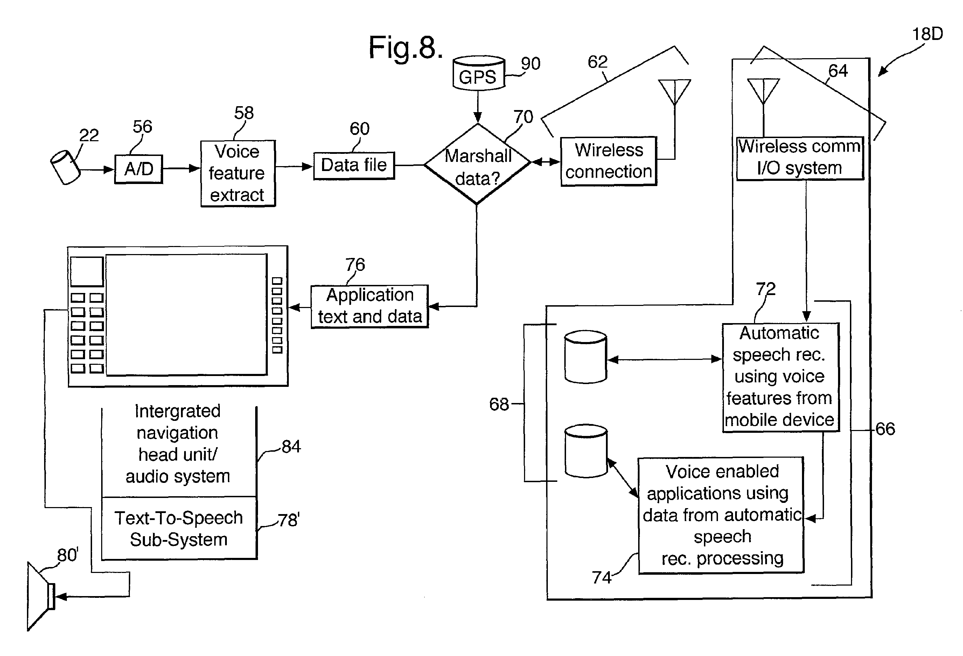

Figures 7 and 8 show fourth embodiment system 18D, which like system 18A of Figure 3, utilizes digitization of speech from microphone 22 through digitizer 56 and voice feature extraction 58 from which the features are extracted, with the data then being sent to data file 60. Also, like system 18A, the data is marshalled and sent to off-board system 66 for processing and then returned to the on-board systems with the result being application text and data 76. The differences arise, however, with the use of an integrated navigation head unit/audio system 84 or what may also be called a heads-up system, rather than an audio device such as radio, or speaker, 80. As such, the text-to-speech conversion is now a subsystem of navigation head unit 84 and the conversion to speech may actually be a supplement to the textual depiction of the data in the unit 84. The data may also be sent to an additional radio, or speaker, 80' for distribution to the occupants of the vehicle. Further shown in Figure 7 is additional data storage 86 included with integrated navigation head unit/audio system 84, with data storage 86 being utilized to provide, for example, an overview of a route if the application had been a navigation application, or other long term data, which may be necessary or useful to the occupants of the vehicle.

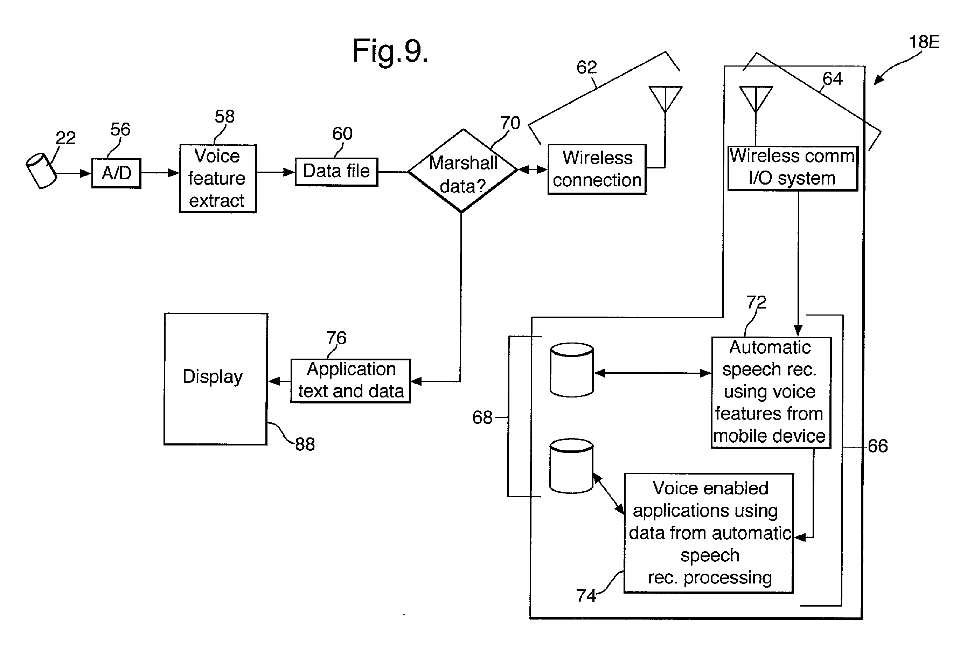

Figure 9 shows fifth embodiment system 18E, wherein display unit 88 is utilized rather than navigation unit 84 or radio, or speaker, 80. As a result of the usage of unit 88, the application data and text 76 needs only to be displayed and does not need to be converted into an audible format for distribution to the occupants of the vehicle.

It is to be noted that although a global positioning system is not a requirement of each of these systems, GPS 90 as shown in Figures 4 and 8, may be provided in the system and may be used to provide additional data for an off-board navigation application, if such is desired. Other additional devices similar to GPS 90 may also be provided to provide further information and/or data in the system.

Although the only specific application referenced has been navigation applications, the distributed speech recognition and off-board application processing structure may be utilized for any of a wide variety of other applications, which may be useful to the user or occupants of a motor vehicle, such as, for example, a trouble shooting system in which the user may describe, for example, a problem with the steering, such as the car tending to pull to one side while driving in a straight line. This information could then sent to the off-board processing system and through a trouble shooting program, with the results being sent back to the user such that the user or the vehicle computer may perform additional tests while on the road or may be told whether the problem is more serious than he or she originally thought. Thus, this system structure is not limited to only navigation applications, but may be utilized with a wide variety of applications. Also, with the structure of this system, it is not required to be installed by the original equipment manufacturer, for example, the car manufacturer, but may be installed into a vehicle by an after market installer since the only changes to the vehicle itself would be small amounts of additional hardware, with software imbedded in the added hardware, rather than extensive reconstruction to include a self-contained processing system built on the vehicle.

While this invention has been described as having exemplary structures, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A control system for a vehicle, said control system (18A, 18B, 18C, 18D, 18E) comprising a user interface device (22, 80) and a data receipt device (62) disposed in the vehicle, **characterized by** a data transmission device (62, 64) for transmission of data acquired from said user interface device to an off-board device (66), the off-board device including data processing means for operating a program application (72, 74), and said data receipt device (62) **characterized in that** it is adapted to receive data processed by the program application and provide said processed data for use in the operation of the vehicle.

2. The control system of claim 1 **characterized in that** said user interface device is adapted to receive voice data from an operator of the vehicle.

3. The control system of claim 1, **characterized in that** said user interface device further includes a pre-processing device (56, 58, 60) for consolidating and compressing data from said user interface device.

4. The control system of claim 1, **characterized by** a global positioning system device (90) for determining the position of the vehicle, said global positioning system device structured and arranged to coordinate with the processed data received by said data receipt device.

5. The control system of claim 1 **characterized in that** said user interface device includes a navigation display (84, 88) structured and arranged to display routes received by said data receipt device.

6. The control system of claim 1 **characterized in that** said data transmission device, said data receipt device, and said program application maintain communication via a wireless 1xRTT/GPRS network.

7. The control system of claim 1 **characterized by** an operations control device (81) adapted to control operations of the vehicle based n the processed data received by said data receipt device.

8. A method of operating a vehicle comprising acquiring data from an occupant of the vehicle (42), processing the data (50), and operating the vehicle in response to the processed data, **characterized by** transmitting the acquired data from the vehicle to an off-board system (48), processing the data according to a program application of the off-board system (50), transmitting processed data from the off-board system to the vehicle (52), and distributing the processed data to the occupant of the vehicle (55).

9. The method of claim 8 **characterized by** pre-processing the data (44, 46) acquired from the occupant of the vehicle prior to transmitting the data.

10. The method of claim 8 **characterized by** distributing the processed data to an audible broadcast system (55).

11. The method of claim 8 **characterized by** distributing the processed data to a handheld device within the vehicle (55).

12. The method of claim 8 **characterized by** preparing route calculations based upon the processed data (54), and displaying the route calculations to occupants of the vehicle (55).

13. The method of claim 8 **characterized by** preparing maps based upon the processed data (54), and displaying the maps to the occupants of the vehicle (55).

14. The method of claim 8 **characterized by** controlling operations of the vehicle based on the processed data.

15. A voice-enabled control system (18A, 18B, 18C, 18D, 18E) comprising a voice-actuated user interface (22, 80) adapted to receive data from an occupant of the motor vehicle in the form of speech and produce speech data, and a data receipt device (62), **characterized by** a data transmission device (62, 64) coupled to said voice-actuated user interface and for transmission of said speech data to an off-board device including data processing means (66) having a program application (72, 74), said speech data being transmitted by said data transmission device in accordance with directions from said user interface, and said data receipt device receiving data (76) from the data processing device to be used in operation of the motor vehicle.

16. The voice enabled control system of claim 15, **characterized by** a pre-processing device (56, 58, 60) for consolidating and compressing said speech data from said user interface device.

17. The voice-enabled control system of claim 16, **characterized in that** said pre-processing device further includes a speech recognition device.

18. The voice-enabled control system of claim 15, **characterized by** a global positioning system device (90) for determining the position of the vehicle, said global positioning system device structured and arranged to coordinate with said processed data received by said data receipt device.

19. The voice-enabled control system of claim 15 **characterized in that** said voice-actuated user interface device includes a navigation display (84, 88) structured and arranged to display routes calculated and mapped routes received by the data receipt device.

20. The voice-enabled control system of claim 15 **characterized in that** said data transmission device, said data receipt device, and said program application maintain communication via a wireless 1xRTT/GPRS network.

21. The voice enabled control system of claim 15 **characterized in that** said voice-actuated user interface further includes an operations control device (81) for assisting in operation of the vehicle.

22. The voice enabled control system of claim 15 **characterized in that** said user interface and said data receipt device are in communication with an operations control device (81) for assisting in operation of the vehicle.
